(19)

Europäisches
Patentamt
European
Patent Office
Office européen
des brevets

(11) **EP 2 996 280 A1**

(12) **EUROPEAN PATENT APPLICATION**
published in accordance with Art. 153(4) EPC

(43) Date of publication:
**16.03.2016 Bulletin 2016/11**

(21) Application number: **15790431.9**

(22) Date of filing: **27.01.2015**

(51) Int Cl.:
***H04L 9/30*** (2006.01)

(86) International application number:
**PCT/CN2015/071619**

(87) International publication number:
**WO 2016/000447 (07.01.2016 Gazette 2016/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.07.2014 CN 201410315215**

(71) Applicant: **Huawei Technologies Co. Ltd.
Shenzhen, Guangdong 518129 (CN)**

(72) Inventors:
• **WANG, Baocang
Xi'an
Shaanxi 710071 (CN)**

• **LEI, Hao
Shenzhen
Guangdong 518129 (CN)**
• **HU, Yupu
Xi'an
Shaanxi 710071 (CN)**

(74) Representative: **Kreuz, Georg Maria
Huawei Technologies Duesseldorf GmbH
Riesstrasse 8
80992 München (DE)**

(54) **PUBLIC KEY ENCRYPTION COMMUNICATION METHOD AND APPARATUS**

(57) Embodiments of the present invention provide a method and an apparatus for public-key encrypted communication. The method for public-key encrypted communication in the present invention includes: encrypting, by a first device, random information according to a first public key to obtain a first ciphertext; encrypting, by the first device, plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and sending, by the first device, the first ciphertext and the second ciphertext to the second device. The embodiments of the present invention achieve a public-key encrypted communication manner with higher security.

A first device encrypts random information according to a first public key to obtain a first ciphertext; and the first device encrypts plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring ∿S101

The first device sends the first ciphertext and the second ciphertext to the second device ∿S102

FIG. 1

EP 2 996 280 A1

## Description

## TECHNICAL FIELD

Embodiments of the present invention relate to communications technologies, and in particular, to a method and an apparatus for public-key encrypted communication.

## BACKGROUND

In communications technologies, to ensure secrecy of communication between two communication individuals, data needs to be encrypted using a key at a transmit end and decrypted using a key at a receive end. If the key used for encryption and the key used for decryption are the same, the encryption is referred to as symmetric key encryption; if the two keys are different, the encryption is referred to as asymmetric key encryption, which is also referred to as public key encryption. The public key encryption manner has two important principles: First, it is required that an encrypted ciphertext must be secure on the premise that an encryption algorithm and a public key are both made public; second, it is required that calculation or processing for both data encryption at the transmit end and data decryption at the receive end by using a private key should be simple but deciphering should be difficult for other persons not having the private key. With development of computer networks, requirements on information confidentiality become increasingly high, and a public key cryptographic algorithm has demonstrated irreplaceable advantages over a symmetric key encryption algorithm.

An existing secure communication method based on a public key system uses a public key system number theory research unit (Number Theory Research Unit, NTRU for short). The NTRU is a cryptographic system based on a polynomial ring. A specific algorithm is as follows: using a public key and a private key respectively for encryption and decryption, where the public key and the private key are calculated according to system parameters $N, p,$ and $q$ and two randomly selected polynomials $f$ and $g$. Such a method has a low security problem.

## SUMMARY

Embodiments of the present invention provide a method and an apparatus for public-key encrypted communication, so as to achieve a public-key encrypted communication manner with higher security.

A first aspect of the embodiments of the present invention provides a method for public-key encrypted communication, including:

encrypting, by a first device, random information according to a first public key to obtain a first ciphertext; encrypting, by the first device, plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and sending, by the first device, the first ciphertext and the second ciphertext to the second device.

With reference to the first aspect, in a first possible implementation manner of the first aspect, the random information includes a first random polynomial and a second random polynomial, and the performing, by a first device, encryption according to a first public key and random information to obtain a first ciphertext specifically includes:

calculating, by the first device, on a first truncated polynomial ring modulo a first system parameter according to the first public key, the first random polynomial, and the second random polynomial, to obtain the first ciphertext.

With reference to the first possible implementation manner of the first aspect, in a second possible implementation manner of the first aspect, the plaintext information is represented as a polynomial on a second truncated polynomial ring modulo a second system parameter, and the encrypting, by the first device, plaintext information according to a second public key to obtain a second ciphertext specifically includes:

calculating, by the first device, on the second truncated polynomial ring modulo the second system parameter according to the second public key, the first random polynomial, the second random polynomial, and the plaintext information, to obtain the second ciphertext.

With reference to the first possible implementation manner of the first aspect, in a third possible implementation manner of the first aspect, the calculating, by the first device, on a first truncated polynomial ring modulo a first system parameter according to the first public key, the first random polynomial, and the second random polynomial, to obtain the first ciphertext specifically includes:

calculating on the first truncated polynomial ring according to $c_1 = r_1 h_1 + r_2$ to obtain the first ciphertext, where $h1$ is the first public key, $r_1$ is the first random polynomial, $r_2$ is the second random polynomial, the first truncated polynomial ring is $Z_{q1} [X]/X^N$ -1, and

$q_1$ is the first system parameter.

With reference to the second possible implementation manner of the first aspect, in a fourth possible implementation manner of the first aspect, the calculating, by the first device, on the second truncated polynomial ring modulo the second system parameter according to the second public key, the first random polynomial, the second random polynomial, and the plaintext information, to obtain the second ciphertext specifically includes:

calculating on the second truncated polynomial ring according to $c_2 = r_1 h_2 + r_2 + M$ to obtain the second ciphertext, where $h_2$ is the second public key, $r_1$ is the first random polynomial, $r_2$ is the second random polynomial, the second truncated polynomial ring is $Z_{q2}[X]/X^N - 1$, and $q_2$ is the second system parameter.

With reference to any one of the second to third possible implementation manners of the first aspect, in a fifth possible implementation manner of the first aspect, the first public key is obtained through calculation on the first truncated polynomial ring modulo the first system parameter according to the first system parameter, a third random polynomial, and a fourth random polynomial, the third random polynomial has an inverse element on both the first truncated polynomial ring modulo the first system parameter and a third truncated polynomial ring modulo a third system parameter, and the fourth random polynomial has an inverse element on the first truncated polynomial ring modulo the first system parameter.

With reference to the fifth possible implementation manner of the first aspect, in a sixth possible implementation manner of the first aspect, the first public key is obtained through calculation on the first truncated polynomial ring according to $h_1 = p f_{q_1}^{-1} g$, where $p$ is the third system parameter, $f$ is the third random polynomial, $f_{q_1}^{-1}$ is an inverse element of the third random polynomial on the first truncated polynomial ring modulo the first system parameter, $g$ is the fourth random polynomial, $q_1$ is the first system parameter, and the first truncated polynomial ring is $Z_{q1}[X]/X^N - 1$.

With reference to the second possible implementation manner of the first aspect, in a seventh possible implementation manner of the first aspect, the second public key is randomly selected on the second truncated polynomial ring, and the second truncated polynomial ring is $Z_{q2}[X]/X^N - 1$.

A second aspect of the embodiments of the present invention provides a method for public-key encrypted communication, including:

receiving, by a second device, a first ciphertext and a second ciphertext that are sent by a first device; calculating, by the second device, according to a first private key, a second private key, and the first ciphertext to obtain a second random polynomial, and obtaining a first random polynomial according to a third private key, where the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial; and

obtaining, by the second device, plaintext information according to the first random polynomial, the second random polynomial, the second ciphertext, and a second public key, where the plaintext information is unencrypted data to be sent by the first device to the second device, the second public key is represented in a form of a polynomial, and the second public key is randomly selected on a truncated polynomial ring.

With reference to the second aspect, in a first possible implementation manner of the second aspect, the calculating, by the second device, according to a first private key, a second private key, and the first ciphertext to obtain a second random polynomial specifically includes:

calculating, by the second device, on a first truncated polynomial ring modulo a first system parameter according to the first ciphertext and the first private key to obtain a procedure parameter; and obtaining, by the second device, the second random polynomial on a third truncated polynomial ring modulo a third system parameter according to the procedure parameter and the second private key.

With reference to the first possible implementation manner of the second aspect, in a second possible implementation manner of the second aspect, the obtaining a first random polynomial according to a third private key specifically includes:

calculating, by the second device, on the first truncated polynomial ring modulo the first system parameter according to the procedure parameter and the third private key to obtain the first random polynomial.

With reference to the second possible implementation manner of the second aspect, in a third possible implementation manner of the second aspect, the obtaining, by the second device, plaintext information according to the first random polynomial, the second random polynomial, the second ciphertext, and a second public key specifically includes:

calculating, by the second device, on a second truncated polynomial ring modulo a second system parameter according to the first random polynomial, the second random polynomial, the second ciphertext, and the second public key to obtain the plaintext information.

With reference to the first possible implementation manner of the second aspect, in a fourth possible implementation manner of the second aspect, the calculating, by the second device, on a first truncated polynomial ring modulo a first system parameter according to the first ciphertext and the first private key to obtain a procedure parameter specifically includes:

calculating, by the second device, on the first truncated polynomial ring modulo the first system parameter according to $s=fc_1$ to obtain the procedure parameter, where $f$ is the first private key, and $c_1$ is the first ciphertext.

With reference to the fourth possible implementation manner of the second aspect, in a fifth possible implementation manner of the second aspect, the obtaining, by the second device, the second random polynomial on a third truncated polynomial ring modulo a third system parameter according to the procedure parameter and the second private key specifically includes:

calculating, by the second device, on the third truncated polynomial ring modulo the third system parameter according to $s_p=s(\bmod\ p)$ and $r_2 = s_p f_p^{-1}$ to obtain the second random polynomial, where $p$ is the third system parameter, $f_p^{-1}$ is the second private key, $s$ is the procedure parameter, and the third truncated polynomial ring is $Z_p[X]/X^N-1$.

With reference to the fourth possible implementation manner of the second aspect, in a sixth possible implementation manner of the second aspect, the calculating, by the second device, on the first truncated polynomial ring modulo the first system parameter according to the procedure parameter and the third private key to obtain the first random polynomial specifically includes:

calculating on the first truncated polynomial ring according to $s_p=s(\bmod\ p)$ and $r_1=(s-s_p)G$ to obtain the first random polynomial, where $s$ is the procedure parameter, $q_1$ is the first system parameter, $p$ is the third system parameter, G is the third private key, and the first truncated polynomial ring is $Zq_1[X]/X^N-1$.

With reference to the third possible implementation manner of the second aspect, in a seventh possible implementation manner of the second aspect, the calculating, by the second device, on a second truncated polynomial ring modulo a second system parameter according to the first random polynomial, the second random polynomial, the second ciphertext, and the second public key to obtain the plaintext information specifically includes:

calculating on the second truncated polynomial ring according to $M=c_2-r_1h_2-r_2$ to obtain the plaintext information, where $c_2$ is the second ciphertext, $r_1$ is the first random polynomial, $r_2$ is the second random polynomial, and $h_2$ is the second public key.

With reference to the second possible implementation manner of the second aspect, in an eighth possible implementation manner of the second aspect, the first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

With reference to the eighth possible implementation manner of the second aspect, in a ninth possible implementation manner of the second aspect, the third private key is obtained through calculation on the first truncated polynomial modulo the first system parameter according to $G=p^{-1}g_{q_1}^{-1}$, where $p^{-1}$ is an inverse element of the third system parameter modulo the first system parameter, $q_1$ is the first system parameter, $g_{q_1}^{-1}$ is an inverse element of the fourth random polynomial on the first truncated polynomial ring, and g is the fourth random polynomial.

A third aspect of the embodiments of the present invention provides an apparatus for public-key encrypted communication, including:

an encryption unit, configured to perform encryption according to a first public key and random information to obtain a first ciphertext; and further configured to encrypt plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and

a transceiver unit, configured to send the first ciphertext and the second ciphertext to the second device.

With reference to the third aspect, in a first possible implementation manner of the third aspect, the random information includes a first random polynomial and a second random polynomial, and the encryption unit is specifically configured to:

calculate on a first truncated polynomial ring modulo a first system parameter according to the first public key, the first random polynomial, and the second random polynomial to obtain the first ciphertext.

With reference to the first possible implementation manner of the third aspect, in a second possible implementation manner of the third aspect, the plaintext information is represented as a polynomial on a second truncated polynomial ring modulo a second system parameter, and the encryption unit is further specifically configured to:

calculate on the second truncated polynomial ring modulo the second system parameter according to the second public key, the first random polynomial, the second random polynomial, and the plaintext information to obtain the second ciphertext.

With reference to the first possible implementation manner of the third aspect, in a third possible implementation manner of the third aspect, the encryption unit is configured to calculate on the first truncated polynomial ring modulo the first system parameter according to the first public key, the first random polynomial, and the second random polynomial to obtain the first ciphertext, and is specifically configured to:

calculate on the first truncated polynomial ring according to $c_1 = r_1 h_1 + r_2$ to obtain the first ciphertext, where $h_1$ is the first public key, $r_1$ is the first random polynomial, $r_2$ is the second random polynomial, the first truncated polynomial ring is $Z_{q1}[X]/X^N - 1$, and $q_1$ is the first system parameter.

With reference to the second possible implementation manner of the third aspect, in a fourth possible implementation manner of the third aspect, the encryption unit is configured to calculate on the second truncated polynomial ring modulo the second system parameter according to the second public key, the first random polynomial, the second random polynomial, and the plaintext information to obtain the second ciphertext, and is specifically configured to:

calculate on the second truncated polynomial ring according to $c_2 = r_1 h_2 + r_2 + M$ to obtain the second ciphertext, where $h_2$ is the second public key, $r_1$ is the first random polynomial, $r_2$ is the second random polynomial, the second truncated polynomial ring is $Z_{q2}[X]/X^N - 1$, and $q2$ is the second system parameter.

With reference to any one of the second to third possible implementation manners of the third aspect, in a fifth possible implementation manner of the third aspect, the first public key is obtained through calculation on the first truncated polynomial ring modulo the first system parameter according to the first system parameter, a third random polynomial, and a fourth random polynomial, the third random polynomial has an inverse element on both the first truncated polynomial ring modulo the first system parameter and a third truncated polynomial ring modulo a third system parameter, and the fourth random polynomial has an inverse element on the first truncated polynomial ring modulo the first system parameter.

With reference to the fifth possible implementation manner of the third aspect, in a sixth possible implementation manner of the third aspect, the first public key is obtained through calculation on the first truncated polynomial ring according to $h_1 = p f_{q_1}^{-1} g$, where $p$ is the third system parameter, $f$ is the third random polynomial, $f_{q_1}^{-1}$ is an inverse element of the third random polynomial on the first truncated polynomial ring modulo the first system parameter, $g$ is the fourth random polynomial, $q_1$ is the first system parameter, and the first truncated polynomial ring is $Z_{q1}[X]/X^N - 1$.

With reference to the second possible implementation manner of the third aspect, in a seventh possible implementation manner of the third aspect, the second public key is randomly selected on the second truncated polynomial ring, and the second truncated polynomial ring is $Z_{q2}[X]/X^N - 1$.

A fourth aspect of the embodiments of the present invention provides an apparatus for public-key encrypted communication, including:

a transceiver unit, configured to receive a first ciphertext and a second ciphertext that are sent by a first device; and
a decryption unit, configured to calculate according to a first private key, a second private key, and the first ciphertext to obtain a second random polynomial, and obtain a first random polynomial according to a third private key, where the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial, where

the decryption unit is further configured to obtain plaintext information according to the first random polynomial, the second random polynomial, the second ciphertext, and a second public key, where the plaintext information is unencrypted data to be sent by the first device to the second device, the second public key is represented in a form of a polynomial, and the second public key is randomly selected on a truncated polynomial ring.

With reference to the fourth aspect, in a first possible implementation manner of the fourth aspect, the decryption unit is specifically configured to:

calculate on a first truncated polynomial ring modulo a first system parameter according to the first ciphertext and the first private key to obtain a procedure parameter; and
obtain the second random polynomial on a third truncated polynomial ring modulo a third system parameter according to the procedure parameter and the second private key.

With reference to the first possible implementation manner of the fourth aspect, in a second possible implementation manner of the fourth aspect, the decryption unit is further specifically configured to:

calculate, by the second device, on the first truncated polynomial ring modulo the first system parameter according to the procedure parameter and the third private key to obtain the first random polynomial.

With reference to the second possible implementation manner of the fourth aspect, in a third possible implementation manner of the fourth aspect, the decryption unit is further specifically configured to:

calculate on a second truncated polynomial ring modulo a second system parameter according to the first random polynomial, the second random polynomial, the second ciphertext, and the second public key to obtain the plaintext information.

With reference to the first possible implementation manner of the fourth aspect, in a fourth possible implementation manner of the fourth aspect, the decryption unit calculates on the first truncated polynomial ring modulo the first system parameter according to the first ciphertext and the first private key to obtain the procedure parameter, and is specifically configured to:

calculate on the first truncated polynomial ring modulo the first system parameter according to $s=fc_1$ to obtain the procedure parameter, where $f$ is the first private key, and $c_1$ is the first ciphertext.

With reference to the fourth possible implementation manner of the fourth aspect, in a fifth possible implementation manner of the fourth aspect, the decryption unit obtains the second random polynomial on the third truncated polynomial ring modulo the third system parameter according to the procedure parameter and the second private key, and is specifically configured to:

calculate on the third truncated polynomial ring modulo the third system parameter according to $s_p=s(\mathrm{mod}\ p)$ and $r_2=s_p f_p^{-1}$ to obtain the second random polynomial, where $p$ is the third system parameter, $f_p^{-1}$ is the second private key, $s$ is the procedure parameter, and the third truncated polynomial ring is $Z_p[X]/X^N\text{-}1$.

With reference to the fourth possible implementation manner of the fourth aspect, in a sixth possible implementation manner of the fourth aspect, the decryption unit calculates on the first truncated polynomial ring modulo the first system parameter according to the procedure parameter and the third private key to obtain the first random polynomial, and is specifically configured to:

calculate on the first truncated polynomial ring according to $s_p=s(\mathrm{mod}\ p)$ and $r_1=(s\text{-}s_p)G$ to obtain the first random polynomial, where $s$ is the procedure parameter, $q_1$ is the first system parameter, $p$ is the third system parameter, $G$ is the third private key, and the first truncated polynomial ring is $Z_{q1}[X]/X^N\text{-}1$.

With reference to the third possible implementation manner of the fourth aspect, in a seventh possible implementation manner of the fourth aspect, the decryption unit calculates on the second truncated polynomial ring modulo the second system parameter according to the first random polynomial, the second random polynomial, the second ciphertext, and the second public key to obtain the plaintext information, and is specifically configured to:

calculate on the second truncated polynomial ring according to $M=c_2\text{-}r_1h_2\text{-}r_2$ to obtain the plaintext information, where $c_2$ is the second ciphertext, $r_1$ is the first random polynomial, $r_2$ is the second random polynomial, and $h_2$ is the second public key.

With reference to the second possible implementation manner of the fourth aspect, in an eighth possible implementation manner of the fourth aspect, the first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

With reference to the eighth possible implementation manner of the fourth aspect, in a ninth possible implementation manner of the fourth aspect, the third private key is obtained through calculation on the first truncated polynomial modulo the first system parameter according to $G = p^{-1} g_{q_1}^{-1}$, where $p^{-1}$ is an inverse element of the third system parameter modulo the first system parameter, $q_1$ is the first system parameter, $g_{q_1}^{-1}$ is an inverse element of the fourth random polynomial on the first truncated polynomial ring modulo the first system parameter, and g is the fourth random polynomial.

According to the public-key encrypted communication manner in the embodiments of the present invention, a first device encrypts random information according to a first public key to obtain a first ciphertext, and encrypts plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and the first device sends the first ciphertext and the second ciphertext to the second device. This is equivalent to using random information as a shared key, encrypting the random information, and then using a public key and the random information to encrypt plaintext information, thereby achieving a public-key encrypted communication manner with higher security.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of Embodiment 1 of a method for public-key encrypted communication according to the present invention;
FIG. 2 is a flowchart of Embodiment 2 of a method for public-key encrypted communication according to the present invention;
FIG. 3 is a flowchart of Embodiment 3 of a method for public-key encrypted communication according to the present invention;
FIG. 4 is a schematic processing diagram of an optional implementation manner of step 300 in the method shown in FIG. 3;
FIG. 5 is a schematic processing diagram of an optional implementation manner of step 301 in the method shown in FIG. 3;
FIG. 6 is a schematic processing diagram of an optional implementation manner of step 303 and step 304 in the method shown in FIG. 3;
FIG. 7 is a schematic structural diagram of Embodiment 1 of an apparatus for public-key encrypted communication according to the present invention; and
FIG. 8 is a schematic structural diagram of Embodiment 2 of an apparatus for public-key encrypted communication according to the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

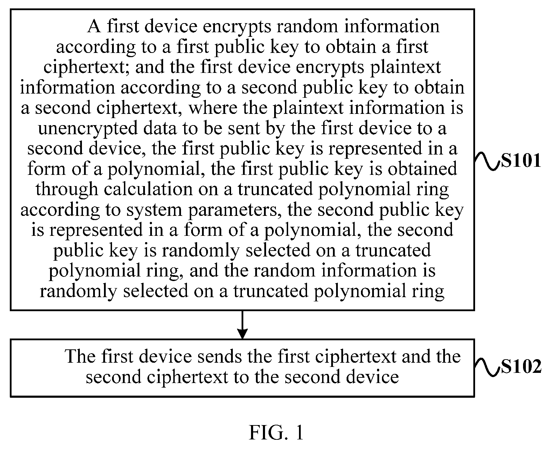

FIG. 1 is a flowchart of Embodiment 1 of a method for public-key encrypted communication according to the present invention. As shown in FIG. 1, the method in this embodiment may include:

S101: A first device encrypts random information according to a first public key to obtain a first ciphertext; and the first device encrypts plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring.
S102: The first device sends the first ciphertext and the second ciphertext to the second device.

In various implementation manners of the method for public-key encrypted communication provided in the present invention, devices at a transmit end and a receive end for public key communication may be respectively referred to as a first device and a second device, and unencrypted data to be sent by the first device to the second device during public key communication may be referred to as plaintext information. The first public key and the second public key may be generated by a key generation device for the public key communication. The key generation device may be the second device or another trusted third-party device. Before sending encrypted data to the second device, the first device acquires, from the key generation device, the first public key and the first public key that are required for encrypted communication with the second device, that is, a public key certificate of the second device. The key generation device also generates a first private key, a second private key, and a third private key, which are paired with the first public key and the second public key. Information about the public keys is stored in a public key certificate issued by a public key infrastructure (Public Key Infrastructure, PKI for short).

The first public key may be represented in a form of a polynomial. The first public key may be calculated on a truncated polynomial ring according to system parameters.

System parameters refer to a group of parameters preset by the key generation device, the first device at the transmit end, and the first device at the receive end based on consideration of security and calculation efficiency in a process of public key communication. A truncated polynomial ring refers to a set of univariate (N-1)$^{th}$-degree polynomials whose coefficients are integers. The truncated polynomial ring used to calculate the first public key may be determined according to the system parameters used in this public key communication.

The second public key may be represented in a form of a polynomial. The second public key is randomly selected on a truncated polynomial ring.

The truncated polynomial ring used to select the second public key may be determined according to the system parameters used in this public key communication. The random information may be randomly selected on a truncated polynomial ring by the first device according to requirements on security and encryption efficiency, that is, the random information may be any univariate polynomial. Coefficients of the univariate polynomial may constitute a vector, and a norm value of the vector of the coefficients is inversely proportional to encryption efficiency. Therefore, the first device may preferably use a univariate polynomial whose vector of coefficients has the smallest norm as the random information.

The first ciphertext obtained by the first device by using the first public key to encrypt the random information and the second ciphertext obtained by the first device by encrypting the plaintext information according to the second public key and the random information are a pair of polynomials.

That the first device encrypts the random information according to the first public key to obtain the first ciphertext is similar to that two communication parties first negotiate a shared key and insert the shared key into a type of one-way trapdoor function, so as to implement probabilistic encryption. According to the encryption manner for obtaining the first ciphertext, the random information is carried. The random information is equivalent to the shared key of the two communication parties. That the first device encrypts the plaintext information according to the second public key to obtain the second ciphertext is similar to using a shared key to implement one-time pad encryption. The second ciphertext carries the plaintext information. According to the encryption mode for obtaining the second ciphertext, the plaintext information is not leaked. It can be proved by using a mathematical method that the public key communication method in the present invention has higher security than an NTRU algorithm in the prior art. A security assessment method may be described as follows: In a particular attack mode, an attacker randomly selects two plaintexts $m_1$ and $m_2$, and by means of a cryptographic algorithm, a plaintext $m_b$ is randomly selected from the two plaintexts and encrypted into a ciphertext c, where $b$ is 1 or 2. If the attacker can determine $b$=1 or $b$=2 according to c with a non-negligible probability, which is equivalent to that the attacker correctly guesses which plaintext is encrypted into the ciphertext c, the attacker successfully breaks semantic security of the encryption algorithm. The foregoing method is used to verify security of the encryption manner in the present invention; because in the present invention, encryption is performed twice by constructing two polynomial-based one-way trapdoor functions, the probability that an attacker breaks semantic security of the algorithm is negligible, while the probability that semantic security of the NTRU encryption algorithm in the prior art is broken is non-negligible. Therefore, it can be proved by using a mathematical method that the present invention has higher security compared with the prior art.

According to the public-key encrypted communication manner in this embodiment of the present invention, a first device encrypts random information according to a first public key to obtain a first ciphertext, and encrypts plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and the first device sends the first ciphertext and the second ciphertext to the second device. This is equivalent to using random information as a shared key, encrypting the random information, and then using a public key and the random information to encrypt plaintext information, thereby achieving a public-key encrypted communication manner with higher security.

Optionally, Embodiment 1 of the method shown in FIG. 1 includes an optional implementation manner, which is different from the method shown in FIG. 1 in that:

the random information in S101 may include a first random polynomial and a second random polynomial.

Correspondingly, the performing, by a first device, encryption according to a first public key and random information to obtain a first ciphertext in S101 may specifically include:

S101-1: The first device calculates on a first truncated polynomial ring modulo a first system parameter according to the first public key, the first random polynomial, and the second random polynomial to obtain the first ciphertext.

The plaintext information in S101 may be represented as a polynomial on a second truncated polynomial ring modulo a second system parameter.

Correspondingly, the encrypting, by the first device, plaintext information according to a second public key to obtain a second ciphertext in S101 may specifically include:

S101-2: The first device calculates on the second truncated polynomial ring modulo the second system parameter according to the second public key, the first random polynomial, the second random polynomial, and the plaintext information to obtain the second ciphertext.

The first public key in S101-1 may be obtained through calculation on the first truncated polynomial ring by the key generation device according to the first system parameter, a third random polynomial, and a fourth random polynomial. The third random polynomial and the fourth random polynomial may be randomly selected by the key generation device. A value range of the third random polynomial should satisfy that the third random polynomial has an inverse element on both the first truncated polynomial ring modulo the first system parameter and a third truncated polynomial ring modulo a third system parameter, and a value range of the fourth random polynomial is a polynomial having an inverse element on the first truncated polynomial ring.

The second public key in S101-2 may be randomly selected by the key generation device, and a value range of the second public key is any polynomial on the second truncated polynomial ring.

For example, the first public key may be obtained through calculation on the first truncated polynomial ring according to $h_1 = p f_{q_1}^{-1} g$ , where $h_1$ is the first public key, $p$ is the third system parameter, $f$ is the third random polynomial, $f_{q_1}^{-1}$ is an inverse element of the third random polynomial on the first truncated polynomial ring modulo the first system parameter, g is the fourth random polynomial, and the first truncated polynomial ring is $Z_{q1}[X]/X^N\text{-}1$.

The first ciphertext in S101-1 may be obtained through calculation on the first truncated polynomial ring according to $c_1 = r_1 h_1 + r_2$, where $h_1$ is the first public key, $r_1$ is the first random polynomial, $r_2$ is the second random polynomial, the first truncated polynomial ring is $Z_{q1}[X]/X^N\text{-}1$. and $q_1$ is the first system parameter.

The second ciphertext in S101-2 may be obtained through calculation on the second truncated polynomial ring according to $c_2 = r_1 h_2 + r_2 + M,$ where $h_2$ is the second public key, $r_1$ is the first random polynomial, $r_2$ is the second random polynomial, the second truncated polynomial ring is $Z_{q2}[X]/X^N\text{-}1$, and $q_2$ is the second system parameter.

In the foregoing implementation manner, the first system parameter in S101-1, the second system parameter in S101-2, and a fourth system parameter $N$ may all be preset by the key generation device according to requirements on security and key generation performance. Optionally, for security of the highest level, 503 may be selected as the fourth system parameter $N$. Preferably, the first system parameter and the second system parameter are two odd primes, and the second system parameter is equal to the first system parameter plus 2, that is, $q_2 = q_1 + 2$. For example, $q_1$ is 239, and $q_2$ is 241; or $q_1$ is 269, and $q_2$ is 271.

It should be noted that a truncated polynomial ring refers to a set of univariate (N-1)th-degree polynomials whose coefficients are integers, and can be generally represented as $Z[X]/X^N$ $\text{-}1;$ the first truncated polynomial ring $Z_{q1}[X]/X^N\text{-}1$ modulo the first system parameter in S101-1 refers to a truncated polynomial ring obtained from the truncated polynomial ring modulo the first system parameter. Similarly, the third truncated polynomial ring $Z_p[X]/X^N\text{-}1$ modulo the third system parameter refers to a truncated polynomial ring obtained from the truncated polynomial ring modulo the third system parameter. In addition, a modulo operation on a polynomial refers to division of a polynomial by a modulus polynomial, and a result of the modulo operation on the polynomial refers to a remainder polynomial obtained through division of the polynomial by the modulus polynomial. For example, an operation result of a polynomial modulo a polynomial $X^N\text{-}1$ is a remainder polynomial of division of the polynomial by the polynomial $X^N\text{-}1$.

Further, to reduce the quantity of calculations, for the modulo operation of the present invention, only modulo operation results within an absolute minimum complete residue system are used. For example, operation results within a minimum complete residue system of a natural number modulo 3 are -1, 0, and 1 instead of 0, 1, and 2. Correspondingly, when the first random polynomial and the second random polynomial are selected, a polynomial whose coefficient is +1 or -1 or 0 may be selected on the truncated polynomial ring $Z[X]/X^N$-1, where a quantity of terms whose coefficient is +1 is about N/3, a quantity of terms whose coefficient is -1 is about N/3-1, and coefficients of the rest of the terms are 0.

In this embodiment, the first device sends the first ciphertext and the second ciphertext to the second device, so that the second device performs decryption according to the first ciphertext and the second ciphertext as well as the first private key, the second private key, and the third private key that correspond to the first public key and the second public key to obtain the plaintext information. This is equivalent to using random information as a shared key, encrypting the random information, and then using a public key and the random information to encrypt plaintext information, thereby achieving a public-key encrypted communication manner with higher security. In addition, compared with other encryption manners whose security can be proved, the encryption method of the present invention has some improvements in aspects of encryption speed, decryption speed, and ciphertext expansion ratio.

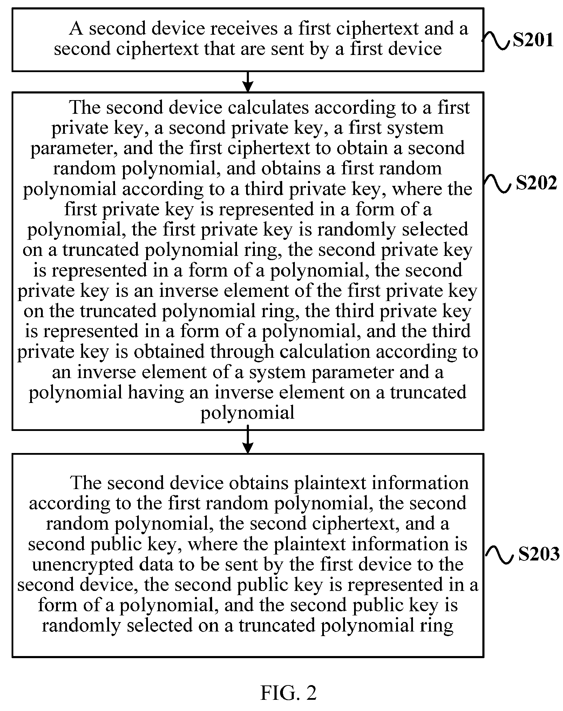

FIG. 2 is a flowchart of Embodiment 2 of a method for public-key encrypted communication according to the present invention. As shown in FIG. 2, the method in this embodiment may include:

> S201: A second device receives a first ciphertext and a second ciphertext that are sent by a first device.
> S202: The second device calculates according to a first private key, a second private key, a first system parameter, and the first ciphertext to a second random polynomial, and obtains a first random polynomial according to a third private key, where the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial.
> S203: The second device obtains plaintext information according to the first random polynomial, the second random polynomial, the second ciphertext, and a second public key, where the plaintext information is unencrypted data to be sent by the first device to the second device, the second public key is represented in a form of a polynomial, and the second public key is randomly selected on a truncated polynomial ring.

The first ciphertext and the second ciphertext that are sent by the first device and received by the second device are encrypted data, and the first ciphertext and the second ciphertext may be a pair of polynomials.

The first private key may be represented in a form of a polynomial, and the first private key may be randomly selected on a truncated polynomial ring; the second private key may be represented in a form of a polynomial, and the second private key may be an inverse element of the first private key on the truncated polynomial ring; the third private key may be represented in a form of a polynomial, and the third private key may be obtained through calculation according to an inverse element of a system parameter and a polynomial having an inverse element on a truncated polynomial.

System parameters refer to a group of parameters preset by a key generation device, the first device at the transmit end, and the first device at the receive end based on consideration of security and calculation efficiency in a process of public key communication. A truncated polynomial ring refers to a set of univariate (N-1)$^{th}$-degree polynomials whose coefficients are integers.

The truncated polynomial ring used to select the first private key, the truncated polynomial ring used to select the second private key, and the truncated polynomial ring used to select the third private key may be separately determined according to the system parameters used in this public key communication. Before receiving encrypted data sent by the first device, the second device acquires, from the key generation device for public key communication, private key information and public key information that are required for decryption. The key generation device may be the second device or another trusted third-party device. The first private key, the second private key, the third private key, and the second public key may be generated by the key generation device for public key communication. The first private key, the second private key, and the third private key that are generated by the key generation device match the first public key and the second public key.

The process in which the second device calculates according to the first private key, the second private key, the first system parameter, and the first ciphertext to obtain the second random polynomial and obtains the first random polynomial according to the third private key is similar to that two communications parties negotiate a shared key, obtain the second random polynomial corresponding to a one-way trapdoor function through decryption according to the first private key, the second private key, and the first ciphertext, and obtain the first random polynomial through decryption according to the third private key, which is equivalent to acquiring the shared key of the two communications parties from the first ciphertext. The one-way trapdoor function is used by the first device during data encryption, and the system parameter is the same as a system parameter used by the first device during data encryption.

Therefore, the second device can calculate according to the one-way trapdoor function used by the first device in the encryption process, the first private key, the second private key, the first system parameter, the third private key, and the first ciphertext to obtain the second random polynomial and the first random polynomial. The second device can calculate according to the one-way trapdoor function used by the first device in the encryption process, the first random polynomial, the second random polynomial, the second public key, and the second ciphertext to obtain the plaintext information.

Security of the method shown in this embodiment of the present invention is the same as that of the method shown in FIG. 1. For details, refer to the security proving process in Embodiment 1, which is not described in detail herein again.

Optionally, Embodiment 2 of the method shown in FIG. 2 includes an optional implementation manner, which is different from the method shown in FIG. 2 in that:

The calculating, by the second device, according to a first private key, a second private key, and the first ciphertext in S202 to obtain a second random polynomial may specifically include:

S202-1: The second device calculates on a first truncated polynomial ring modulo a first system parameter according to the first ciphertext and the first private key to obtain a procedure parameter.

S202-2: The second device obtains the second random polynomial on a third truncated polynomial ring modulo a third system parameter according to the procedure parameter and the second private key.

The obtaining a first random polynomial according to a third private key in S202 may specifically include:

S202-3: The second device calculates on the first truncated polynomial ring modulo the first system parameter according to the procedure parameter and the third private key to obtain the first random polynomial.

The obtaining, by the second device, plaintext information according to the first random polynomial, the second random polynomial, the second ciphertext, and a second public key in S203 may specifically include:

S203-1: The second device calculates on a second truncated polynomial ring modulo a second system parameter according to the first random polynomial, the second random polynomial, the second ciphertext, and the second public key to obtain the plaintext information.

The first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

The third random polynomial and the fourth random polynomial are randomly selected by the key generation device. A value range of the third random polynomial is a polynomial having an inverse element on both the first truncated polynomial and the third truncated polynomial ring modulo the third system parameter, and a value range of the fourth random polynomial is a polynomial having an inverse element on the first truncated polynomial ring modulo the first system parameter.

It should be noted that the foregoing system parameters, the truncated polynomial rings corresponding to the system parameters, and requirements on results of modulo operations are the same as those in Embodiment 1, and the details are not described herein again.

For example, the procedure parameter in S202-1 may be obtained through calculation on the first truncated polynomial ring modulo the first system parameter according to $s=fc_1$, where $s$ is the procedure parameter, $f$ is the first private key, and $c_1$ is the first ciphertext.

The second random polynomial in S202-2 may be obtained through calculation on the third truncated polynomial ring modulo the third system parameter according to $s_p=s(\bmod p)$ and $r_2=s_p f_p^{-1}$, where $r_2$ is the second random polynomial, $p$ is the third system parameter, $f_p^{-1}$ is the second private key, $s$ is the procedure parameter, and the third truncated polynomial ring is $Z_p[X]/X^N-1$.

The first random polynomial in S202-3 may be obtained through calculation on the first truncated polynomial ring according to $s_p=s(\bmod p)$ and $r_1=(s-s_p)G$, where $s$ is the procedure parameter, $q_1$ is the first system parameter, $p$ is the third system parameter, G is the third private key, and the first truncated polynomial ring is $Z_{q1}[X]/X^N-1$.

The third private key may be obtained through calculation on the first truncated polynomial ring modulo the first system parameter according to $G=p^{-1}g_{q_1}^{-1}$, where $p^{-1}$ is an inverse element of the third system parameter modulo the first system parameter, $q_1$ is the first system parameter, g is the fourth random polynomial, and $g_{q_1}^{-1}$ is an inverse element of the fourth random polynomial on the first truncated polynomial ring.

The plaintext information in S203-1 may be obtained through calculation on the second truncated polynomial ring according to $M=c_2-r_1h_2-r_2$, where $c_2$ is the second ciphertext, $r_1$ is the first random polynomial, $r_2$ is

the second random polynomial, $h_2$ is the second public key, and $q_2$ is the second system parameter.

In this embodiment, the second device receives a first ciphertext and a second ciphertext that are sent by a first device, and calculates according to a first private key, a second private key, a first system parameter, a third private key, and the first ciphertext to obtain a second random polynomial and a first random polynomial, and then obtains plaintext information according to the first random polynomial, the second random polynomial, the second ciphertext, and a second public key. This achieves a public-key encrypted communication manner whose security can be proved. In addition, compared with other encryption manners whose security can be proved, the encryption method of this application has some improvements in aspects of encryption speed, decryption speed, and ciphertext expansion ratio.

The following describes in further detail the technical solutions of the method embodiments shown in FIG. 1 and FIG. 2 by using several specific embodiments.

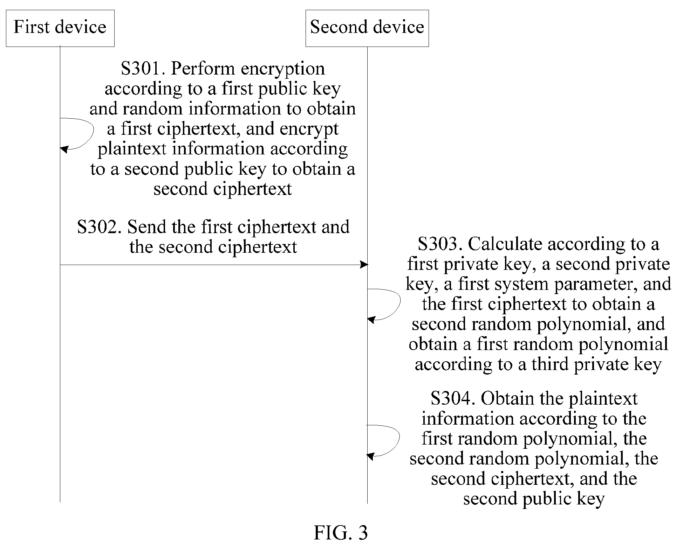

FIG. 3 is a flowchart of Embodiment 3 of a method for public-key encrypted communication according to the present invention. This embodiment describes a process of interaction between a first device at a transmit end and a second device at a receive end that use the methods for public-key encrypted communication shown in FIG. 1 and FIG. 2. As shown in FIG. 3, the method in this embodiment may include:

> S301: A first device performs encryption according to a first public key and random information to obtain a first ciphertext; and the first device encrypts plaintext information according to a second public key to obtain a second ciphertext.

The plaintext information is unencrypted data to be sent by the first device to a second device, and the random information is randomly selected on a truncated polynomial ring.

The first public key and the second public key are generated by a key generation device, and the key generation device may be the second device or another trusted third-party device. The first public key is represented in a form of a polynomial, and the first public key is obtained through calculation on a truncated polynomial ring according to system parameters. The second public key is represented in a form of a polynomial, and the second public key is randomly selected on a truncated polynomial ring.

Optionally, the first random polynomial may be represented as a polynomial on a second truncated polynomial ring modulo a second system parameter.

> S302: The first device sends the first ciphertext and the second ciphertext to the second device.
> S303: The second device calculates according to a first private key, a second private key, a first system parameter, and the first ciphertext to obtain a second random, and obtains a first random polynomial according to a third private key.

The first private key, the second private key, and the third public key are generated by a key generation device, and the key generation device may be the second device or another trusted third-party device. The first private key may be represented in a form of a polynomial, and the first private key may be randomly selected on a truncated polynomial ring; the second private key may be represented in a form of a polynomial, and the second private key may be an inverse element of the first private key on the truncated polynomial ring; the third private key may be represented in a form of a polynomial, and the third private key may be obtained through calculation according to an inverse element of a system parameter and a polynomial having an inverse element on a truncated polynomial.

> S304: The second device obtains the plaintext information according to the first random polynomial, the second random polynomial, the second ciphertext, and the second public key.

Further, before step 301, the method further includes:

> S300: The key generation device calculates the first public key, the second public key, the first private key, the second private key, and the third private key according to the first system parameter, a second system parameter, a third system parameter, and a fourth system parameter.

The first public key may be represented in a form of a polynomial, and the first public key is obtained through calculation on a truncated polynomial ring according to system parameters; the second public key is represented in a form of a polynomial, and the second public key is randomly selected on a truncated polynomial ring;

the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial.

Optionally, the first device may search for the public keys of the second device by using a PKI.

This embodiment has the same technical solution and technical effect as those of the methods for public-key encrypted communication shown in FIG. 1 and FIG. 2, and the details are not described herein again.

In this embodiment, the first device sends the first ciphertext and the second ciphertext to the second device, and the second device performs decryption according to the first ciphertext and the second ciphertext as well as the first private key, the second private key, and the third private key that correspond to the first public key and the second public key to obtain the plaintext information, thereby achieving a public-key encrypted communication manner whose security can be proved.

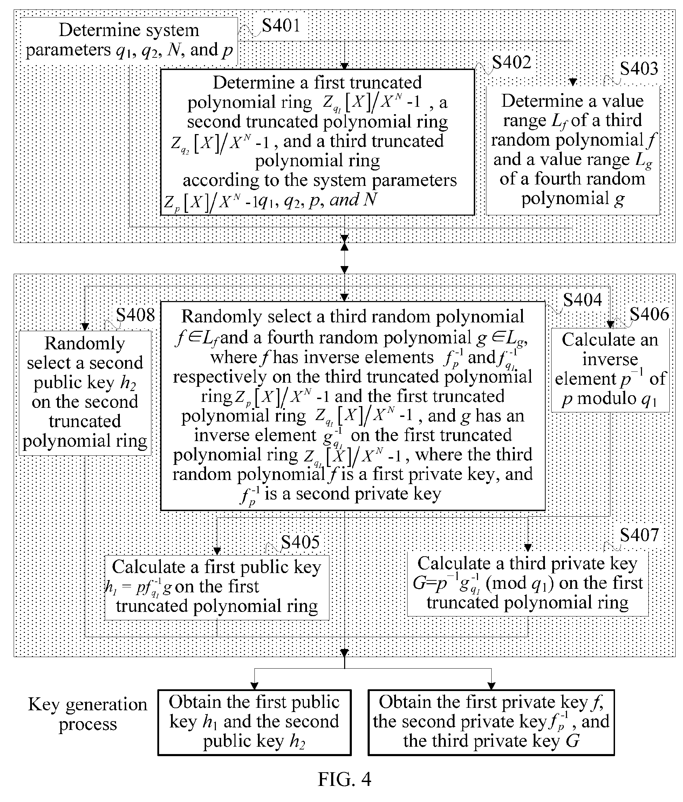

FIG. 4 is a schematic processing diagram of an optional implementation manner of step 300 in the method shown in FIG. 3. As shown in FIG. 4, this embodiment is executed by a key generation device. The key generation device may be the second device or the third-party device. The method in this embodiment may include:

S401: Determine system parameters $q_1$, $q_2$, $p$, and $N$.

$q_1$ is the first system parameter, $q_2$ is the second system parameter, $p$ is the third system parameter, $N$ is the fourth system parameter, and the system parameters are set according to security and encryption performance. Preferably, among the system parameters $q_1$, $q_2$, $p$, and $N$ determined in S401, $q_1$ and $q_2$ may preferably be two odd primes, and $q_2=q_1+2$. For example, $q_1$ may be 239, and $q_2$ may be 241; or $q_1$ may be 269, and $q_2$ may be 271. In addition, for security of the highest level, N may preferably be 503.

S402: Determine a first truncated polynomial ring $Z_{q1}[X]/X^N-1$, a second truncated polynomial ring $Z_{q2}[X]/X^N-1$, and a third truncated polynomial ring $Z_p[X]/X^N-1$ according to the system parameters $q_1$, $q_2$, $p$, and $N$.

The first truncated polynomial ring is a set of truncated polynomials modulo $q_1$, the second truncated polynomial ring is a set of truncated polynomials modulo $q_2$, and the third truncated polynomial ring is a set of truncated polynomials modulo $p$.

S403: Determine a value range $L_f$ of a third random polynomial $f$ and a value range $L_g$ of a fourth random polynomial g.

The value range may be set according to requirements on security and encryption performance. For example, in order to achieve higher security of a private key, when the polynomial $f$ is selected, a polynomial whose coefficient is +1 or -1 or 0 may be selected on a truncated polynomial ring $Z[X]/X^N-1$, where a quantity of terms whose coefficient is +1 is about N/3, a quantity of terms whose coefficient is -1 is about N/3-1, and coefficients of the rest of the terms are 0.

S404: Randomly select a third random polynomial $f \in L_f$ and a fourth random polynomial $g \in L_g$, where

$f$ has inverse elements $f_p^{-1}$ and $f_{q_1}^{-1}$ respectively on the third truncated polynomial ring $Z_p[X]/X^N-1$ and the first truncated polynomial ring $Z_{q1}[X]/X^N-1$, and g has an inverse element $g_{q_1}^{-1}$ on the first truncated polynomial ring $Z_{q1}[X]/X^N-1$.

The third random polynomial $f$ is a first private key, and $f_p^{-1}$ is a second private key.

S405: Calculate a first public key $h_1 = p f_{q_1}^{-1} g$ on the first truncated polynomial ring.

S406: Calculate an inverse element $p^{-1}$ of $p$ modulo $q_1$.

S407: Calculate a third private key $G = p^{-1} g_{q_1}^{-1}$ on the first truncated polynomial ring.

S408: Randomly select a second public key $h_2$ on the second truncated polynomial ring.

After step 408, the key generation device publishes $q_1$, $q_2$, $p$, and $N$, where $h_1$ and $h_2$ are public keys of the second device.

This embodiment has the same technical solution and technical effect as those of the methods for public-key encrypted communication shown in FIG. 1 to FIG. 3, and the details are not described herein again.

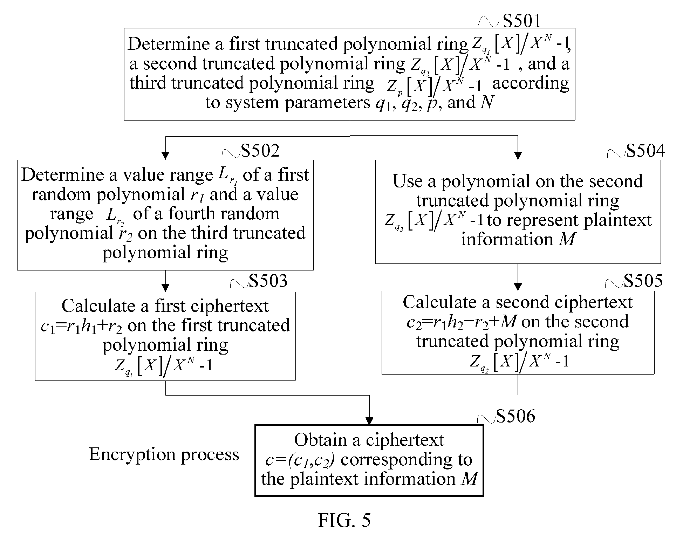

FIG. 5 is a schematic processing diagram of an optional implementation manner of step 301 in the method shown in FIG. 3. As shown in FIG. 5, this embodiment is executed by a first device. The method in this embodiment may include:

S501: Determine a first truncated polynomial ring $Z_{q1}[X]/X^N-1$, a second truncated polynomial ring $Z_{q2}[X]/X^N-1$, and a third truncated polynomial ring $Z_p[X]/X^N-1$ according to system parameters $q_1$, $q_2$, $p$, and $N$.

$q_1$ is the first system parameter, $q_2$ is the second system parameter, $p$ is the third system parameter, $N$ is the fourth system parameter, and the system parameters $q_1$, $q_2$, $p$, and $N$ may be obtained by using the method shown in FIG. 4. The first truncated polynomial ring is a set of truncated polynomials modulo $q_1$, the second truncated polynomial ring is a set of truncated polynomials modulo $q_2$, and the third truncated polynomial ring is a set of truncated polynomials modulo $p$.

S502: Determine a value range $L_{r1}$ of a first random polynomial $r_1$ and a value range $L_{r2}$ of a fourth random polynomial $r_2$ on the third truncated polynomial ring.

The value range may be set according to requirements on security and encryption performance.

S503: Calculate a first ciphertext $c_1 = r_1 h_1 + r_2$ on the first truncated polynomial ring $Z_{q1}[X]/X^N-1$.

$h_1$ is a first public key, and $h_1$ may be obtained by using the method shown in FIG. 4.

S504: Use a polynomial on the second truncated polynomial ring $Z_{q2}[X]/X^N-1$ to represent plaintext information $M$.

S505: Calculate a second ciphertext $c_2=r_1h_2+r_2+M$ on the second truncated polynomial ring $Z_{q2}[X]/X^N-1$. $h_2$ is a second public key, and the system parameter $h_2$ may be obtained by using the method shown in FIG. 4.

S506: Obtain a ciphertext $c=(c_1,c_2)$ corresponding to the plaintext information $M$.

This embodiment has the same technical solution and technical effect as those of the methods for public-key encrypted communication shown in FIG. 1 to FIG. 4, and the details are not described herein again.

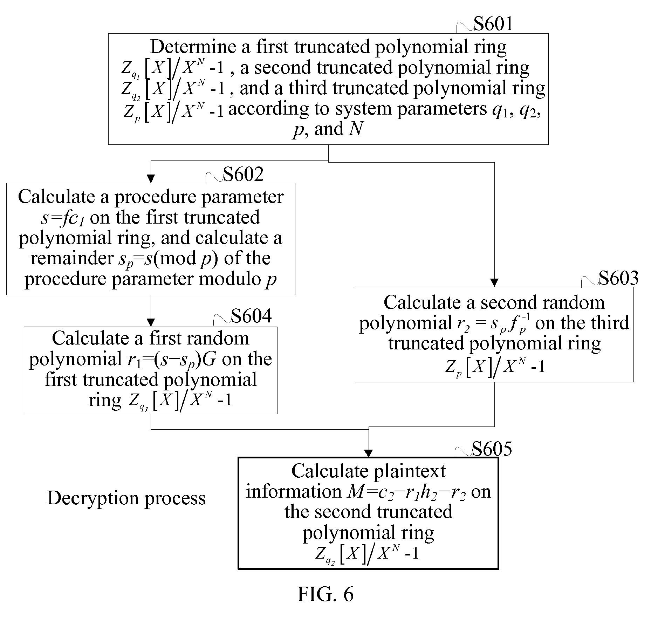

FIG. 6 is a schematic processing diagram of an optional implementation manner of step 303 and step 304 in the method shown in FIG. 3. As shown in FIG. 6, this embodiment is executed by a second device. The method in this embodiment may include:

S601: Determine a first truncated polynomial ring $Z_{q1}[X]/X^N-1$, a second truncated polynomial ring $Z_{q2}[X]/X^N-1$, and a third truncated polynomial ring $Z_p[X]/X^N-1$ according to system parameters $q_1$, $q_2$, $p$, and $N$.

$q_1$ is the first system parameter, $q_2$ is the second system parameter, $p$ is the third system parameter, $N$ is the fourth system parameter, and the system parameters $q_1$, $q_2$, $p$, and $N$ may be obtained by using the method shown in FIG. 4. The first truncated polynomial ring is a set of truncated polynomials modulo $q_1$, the second truncated polynomial ring is a set of truncated polynomials modulo $q_2$, and the third truncated polynomial ring is a set of truncated polynomials modulo $p$.

S602: Calculate a procedure parameter $s=fc_1$ on the first truncated polynomial ring, and calculate a remainder $s_p=s(\text{mod } p)$ of the procedure parameter modulo $p$.

$f$ is the first private key, $c_1$ is the first ciphertext, and $f$ and $c_1$ may be obtained by using the method shown in FIG. 1 to FIG. 4.

S603: Calculate a second random polynomial

$$r_2 = s_p f_p^{-1}$$ on the third truncated polynomial ring.

$f_p^{-1}$ is the second private key, and $f_p^{-1}$ may be obtained by using the method shown in FIG. 4.

S604: Calculate a first random polynomial $r_1=(s-s_p)G$ on the first truncated polynomial ring.

$G$ is the third private key, and G may be obtained by using the method shown in FIG. 4.

S605: Calculate plaintext information $M=c_2-r_1h_2-r_2$ on the second truncated polynomial ring.

$h_2$ is the second public key, $c_2$ is the second ciphertext, and $h_2$ and $c_2$ may be obtained by using the method shown in FIG. 4.

This embodiment has the same technical solution and technical effect as those of the methods for public-key encrypted communication shown in FIG. 1 to FIG. 5, and the details are not described herein again.

Optionally, an embodiment of the present invention further provides an optional implementation manner, which is different from the methods shown in FIG. 4 to FIG. 6 in that step S405 in the method shown in FIG. 4 may be implemented by using a method shown in S405-1.

S405-1: Calculate a first public key $h_1 = f_{q_1}^{-1}g$ on the first truncated polynomial ring. $f_{q_1}^{-1}$ is an inverse element of the third random on the first truncated polynomial ring modulo the first system parameter, $g$ is the fourth random polynomial, $q_1$ is the first system parameter, and the first truncated polynomial ring is $Z_{q1}[X]/X^N-1$.

Correspondingly, step S503 in the method shown in FIG. 5 may be implemented by using a method shown in S503-1.

S503: Calculate a first ciphertext $c_1=pr_1h_1+r_2$ on the first truncated polynomial ring $Z_{q1}[X]/X^N-1$.

$h_1$ is a first public key, and $h_1$ may be obtained by using the method shown in step S405-1.

Other steps of the technical solution of this embodiment are the same as those of the method for public-key encrypted communication shown in FIG. 4 to FIG. 6, and the details are not described herein again.

Moreover, in some scenarios in which resources are limited, the encryption manner provided in the present invention can still provide higher security. Compared with other existing encryption manners whose security can be proved, the encryption method of the present invention has some advantages in aspects of encryption speed, decryption speed, and ciphertext expansion ratio. A specific comparison is as follows:

The encryption speed of the method for public-key encrypted communication in the present invention is higher than that of the NTRU algorithm. For ease of comparison between the quantities of calculations required for encryption work by the present invention and the NTRU algorithm, it is assumed that a to-be-encrypted plaintext has a length of $N\log_2 p\log_2 q_2$ bits. In the present invention, a plaintext having a length of $N\log_2 q_2$ bits can be encrypted each time; therefore, encryption needs to be performed for $\log_2 p$ times. In the present invention, during each encryption, $c_1=r_1h_1+r_2$ needs to be obtained through calculation first on the truncated polynomial ring $Z_{q1}[X]/X^N-1$ modulo $q_1$, and the quantity of calculations for addition can be ignored; therefore, about one polynomial multiplication operation on the ring $Z_{q2}[X]/X^N-1$ is required. Then $c_2=r_1h_2+r_2+M$ is obtained through calculation on the truncated polynomial ring $Z_{q2}[X]/X^N-1$ modulo $q_2$; therefore, about one polynomial multiplication operation on the ring $Z_{q2}[X]/X^N-1$ is also required. Because $q_2=q_1+2$ herein, about two polynomial multiplication operations on the ring $Z_{q1}[X]/X^N-1$ are required. Therefore, to encrypt a plaintext having a length of $N\log_2 p\log_2 q_2$ bits, the solution of the present invention requires about $2\log_2 p$ polynomial multiplication operations on the ring $Z_{q1}[X]/X^N\text{-}1$. The original NTRU algorithm can encrypt a plaintext having a length of $N\log_2 p$ bits each time; therefore, to encrypt a plaintext having a length of $N\log_2 p\log_2 q_2$ bits, the NTRU requires $\log_2 q_2 \approx \log_2 q_1$ times of encryption. The NTRU requires calculation of $c=\varphi h+m$ on a ring $Z_q[X]/X^N\text{-}1$ for each encryption, the quantity of calculations of which is about one polynomial multiplication operation on the ring $Z_{q1}[X]/X^N\text{-}1$. Therefore, to encrypt a plaintext having a length of $N\log_2 p\log_2 q_2$ bits, the NTRU requires about $\log_2 q_1$ polynomial multiplication operations on the ring $Z_{q1}[X]/X^N\text{-}1$. To encrypt a plaintext having a given length, a ratio of the quantity of calculations required by the present invention to the quantity of calculations required by the NTRU algorithm is about $2\log_2 p:\log_2 q_1$. In a case in which the parameters are set to $p=3$ and $q_1=239$, the ratio is about 0.4, that is, the encryption speed of the present invention is about 2.5 times that of the NTRU.

In addition, the decryption speed of the method for public-key encrypted communication in the present invention is higher than that of the NTRU algorithm. For ease of comparison between the quantities of calculations required for decryption work by the present invention and the NTRU algorithm, it is assumed that plaintext information corresponding to a to-be-decrypted ciphertext has a length of $N\log_2 p\log_2 q_2$ bits. The present invention requires $\log_2 p$ times of decryption, and each decryption requires two multiplication operations $s=fc_1$ and $r_1=(s-s_p)G$ on the ring $Z_{q1}[X]/X^N\text{-}1$, one multiplication operation $r_2 = s_p f_p^{-1}$ on the ring $Z_p[X]X^N\text{-}1$, and about one multiplication operation $M=c_2-r_1h_2\text{-}r_2$ on the ring $Z_{q2}[X]/X^N\text{-}1$, and one multiplication operation on the ring $Z_p[X]/X^N\text{-}1$ is equivalent to $\log_2^2 p:\log_2^2 q_1 \approx 0.04$ (given that $p=3$ and $q_1=239$) multiplication operations on the ring $Z_{q1}[X]/X^{N-1}$. Therefore, to decrypt a ciphertext corresponding to a plaintext having a length of $N\log_2 p\log_2 q_2$ bits, the present invention requires about 3.04 multiplication operations on the ring $Z_{q1}[X]/X^N\text{-}1$. Therefore, to decrypt a ciphertext corresponding to a plaintext having a length of $N\log_2 p\log_2 q_2$ bits, the present invention requires about $3.04\log_2 p$ multiplication operations on the ring $Z_{q1}[X]/X^N\text{-}1$. To decrypt a ciphertext corresponding to a plaintext having a length of $N\log_2 p\log_2 q_2$ bits, the NTRU algorithm requires running a decryption algorithm for $\log_2 q_2 \approx \log_2 q_1$ times. The NTRU requires one multiplication operation $a=fc$ on the ring $Z_q[X]/X^N\text{-}1$ and one multiplication operation $m=f_p^{-1}a$ on a ring $Z_p[X]/X^N\text{-}1$ for each decryption. Therefore, the NTRU requires about 1.04 multiplication operations on the ring $Z_{q1}[X]/X^N\text{-}1$ for each decryption. Therefore, to decrypt a ciphertext corresponding first ciphertext.

Correspondingly, the plaintext information is represented as a polynomial on a second truncated polynomial ring modulo a second system parameter, and the encryption unit 11 is further specifically configured to:

calculate on the second truncated polynomial ring modulo the second system parameter according to the second public key, the first random polynomial, the second random polynomial, and the plaintext information to obtain the second ciphertext.

The first public key is obtained through calculation on the first truncated polynomial ring modulo the first system parameter according to the first system parameter, a third random polynomial, and a fourth random polynomial, the third random polynomial has an inverse element on both the first truncated polynomial ring modulo the first system parameter and a third truncated polynomial ring modulo a third system parameter, and the fourth random polynomial has an inverse element on the first truncated polynomial ring modulo the first system parameter. The second public key is randomly selected on the second truncated polynomial ring.

Further, the encryption unit 11 is configured to calculate on the first truncated polynomial ring modulo the first system parameter according to the first public key, the first random polynomial, and the second random polynomial to obtain the first ciphertext, and is specifically configured to:

calculate on the first truncated polynomial ring according to $c_1=r_1 h_1+r_2$ to obtain the first ciphertext, where $h_1$ is the first public key, $r_1$ is the first random polynomial, $r_2$ is the second random polynomial, the first truncated polynomial ring is $Z_{q1}[X]/X^N\text{-}1$, and $q_1$ is the first system parameter.

The encryption unit 11 is configured to calculate on the second truncated polynomial ring modulo the second system parameter according to the second public key, the first random polynomial, the second random polynomial, and the plaintext information to obtain the second ciphertext, and is specifically configured to:

calculate on the second truncated polynomial ring according to $c_2=r_1 h_2+r_2+M$ to obtain the second ciphertext, where $h_2$ is the second public key, $r_1$ is the first random polynomial, $r_2$ is the second random polynomial, the second truncated polynomial ring is $Z_{q2}[X]/X^N\text{-}1$, and $q_2$ is the second system parameter.

The first public key is obtained through calculation on the first truncated polynomial ring according to $pf_{q_1}^{-1}g$, where $p$ is the third system parameter, $f$ is the third random polynomial, $f_{q_1}^{-1}$ is an inverse element of the third random polynomial on the first truncated polynomial ring modulo the first system parameter, g is the fourth random polynomial, $q_1$ is the first system parameter, and the first truncated polynomial ring is $Z_{q1}[X]/X^N$-1; and the second public key is randomly selected on the second truncated polynomial ring, and the second truncated polynomial ring is $Z_{q2}[X]/X^N$-1.

The apparatus in this embodiment may be configured to execute the technical solutions of the method embodiments shown in FIG. 1 to FIG. 6. The implementation principle and technical effect of this embodiment are similar to those of the method embodiments shown in FIG. 1 to FIG. 6, and the details are not described herein again.

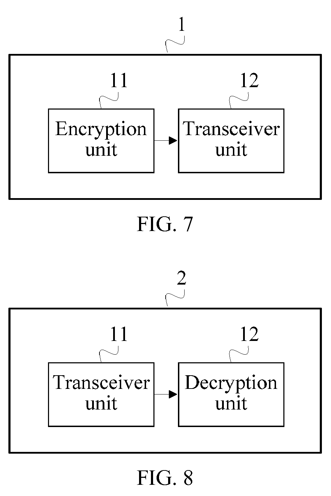

FIG. 8 is a schematic structural diagram of Embodiment 2 of an apparatus for public-key encrypted communication according to the present invention. The apparatus in this embodiment may be a second device, that is, a receive end for public key communication. As shown in FIG. 8, the apparatus 2 in this embodiment may include: a transceiver unit 11 and a decryption unit 12, where the transceiver unit 11 is configured to receive a first ciphertext and a second ciphertext that are sent by a first device; and the decryption unit 12 is configured to calculate according to a first private key, a second private key, and the first ciphertext to obtain a second random polynomial, and obtain a first random polynomial according to a third private key, where the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial, where the decryption unit 12 is further configured to obtain plaintext information according to the first random polynomial, the second random polynomial, the second ciphertext, and a second public key, where the plaintext information is unencrypted data to be sent by the first device to the second device, the second public key is represented in a form of a polynomial, and the second public key is randomly selected on a truncated polynomial ring.

Optionally, the decryption unit 12 is specifically configured to:

calculate on a first truncated polynomial ring modulo a first system parameter according to the first ciphertext and the first private key to obtain a procedure parameter; and obtain the second random polynomial on a third truncated polynomial ring modulo a third system parameter according to the procedure parameter and the second private key.

The decryption unit 12 is further specifically configured to:

calculate, by the second device, on the first truncated polynomial ring modulo the first system parameter according to the procedure parameter and the third private key to obtain the first random polynomial.

The decryption unit 12 is further specifically configured to:

calculate on a second truncated polynomial ring modulo a second system parameter according to the first random polynomial, the second random polynomial, the second ciphertext, and the second public key to obtain the plaintext information.

The first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

For example, the decryption unit 12 calculates on the first truncated polynomial ring modulo the first system parameter according to the first ciphertext and the first private key to obtain the procedure parameter, and may be specifically configured to:

calculate on the first truncated polynomial ring modulo the first system parameter according to $s=fc_1$ to obtain the procedure parameter, where $f$ is the first private key, and $c_1$ is the first ciphertext.

In addition, the decryption unit 12 obtains the second random polynomial on the third truncated polynomial ring modulo the third system parameter according to the procedure parameter and the second private key, and may be specifically configured to:

calculate on the third truncated polynomial ring modulo the third system parameter according to $s_p=s(\bmod\ p)$ and $r_2 = s_p f_p^{-1}$ to obtain the second random polynomial, where $p$ is the third system parameter, $f_p^{-1}$ is the second private key, $s$ is the procedure parameter, and the third truncated polynomial ring is $Z_p[X]/X^N$-1.

Correspondingly, the decryption unit 12 calculates on the first truncated polynomial ring modulo the first system parameter according to the procedure parameter and the third private key to obtain the first random polynomial, and may be specifically configured to:

calculate on the first truncated polynomial ring according to $s_p=s(\bmod\ p)$ and $r_1=(s-s_p)G$ to obtain the first random polynomial, where $s$ is the procedure parameter, $q_1$ is the first system parameter, $p$ is the third system parameter, $G$ is the third private key, and the first truncated polynomial ring is $Z_{q1}[X]/X^N-1$.

Then the decryption unit 12 calculates on the second truncated polynomial ring modulo the second system parameter according to the first random polynomial, the second random polynomial, the second ciphertext, and the second public key to obtain the plaintext information, and may be specifically configured to:

calculate on the second truncated polynomial ring according to $M=c_2-r_1h_2-r_2$ to obtain the plaintext information, where $c_2$ is the second ciphertext, $r_1$ is the first random polynomial, $r_2$ is the second random polynomial, and $h_2$ is the second public key.

The apparatus in this embodiment may be configured to execute the technical solutions of the method embodiments shown in FIG. 1 to FIG. 6. The implementation principle and technical effect of this embodiment are similar to those of the method embodiments shown in FIG. 1 to FIG. 6, and the details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A method for public-key encrypted communication, comprising:

   encrypting, by a first device, random information according to a first public key to obtain a first ciphertext; encrypting, by the first device, plaintext information according to a second public key to obtain a second ciphertext, wherein the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and
   sending, by the first device, the first ciphertext and the second ciphertext to the second device.

2. The method according to claim 1, wherein the random information comprises a first random polynomial and a second random polynomial, and the encrypting, by a first device, random information according to a first public key to obtain a first ciphertext specifically comprises:

   calculating, by the first device, on a first truncated polynomial ring modulo a first system parameter according to the first public key, the first random polynomial, and the second random polynomial, to obtain the first ciphertext.

3. The method according to claim 2, wherein the plaintext information is represented as a polynomial on a second truncated polynomial ring modulo a second system parameter, and the encrypting, by the first device, plaintext information according to a second public key to obtain a second ciphertext specifically comprises:

   calculating, by the first device, on the second truncated polynomial ring modulo the second system parameter according to the second public key, the first random polynomial, the second random polynomial, and the plaintext information, to obtain the second ciphertext.

4. The method according to claim 2, wherein the calculating, by the first device, on a first truncated polynomial ring modulo a first system parameter according to the first public key, the first random polynomial, and the second random polynomial, to obtain the first ciphertext specifically comprises:

   calculating on the first truncated polynomial ring according to $c_1=r_1h_1+r_2$ to obtain the first ciphertext, wherein $h_1$ is the first public key, $r_1$ is the first random polynomial, $r_2$ is the second random polynomial, the first truncated polynomial ring is $Z_{q1}[X]/X^N-1$, and $q_1$ is the first system parameter.

**5.** The method according to claim 3, wherein the calculating, by the first device, on the second truncated polynomial ring modulo the second system parameter according to the second public key, the first random polynomial, the second random polynomial, and the plaintext information, to obtain the second ciphertext specifically comprises:

   calculating on the second truncated polynomial ring according to $c_2=r_1h_2+r_2+M$ to obtain the second ciphertext, wherein $h_2$ is the second public key, $r_1$ is the first random polynomial, $r_2$ is the second random polynomial, the second truncated polynomial ring is $Z_{q2}[X]/X^N-1$, and $q_2$ is the second system parameter.

**6.** The method according to claim 2 or 3, wherein the first public key is obtained through calculation on the first truncated polynomial ring modulo the first system parameter according to the first system parameter, a third random polynomial, and a fourth random polynomial, the third random polynomial has an inverse element on both the first truncated polynomial ring modulo the first system parameter and a third truncated polynomial ring modulo a third system parameter, and the fourth random polynomial has an inverse element on the first truncated polynomial ring modulo the first system parameter.

**7.** The method according to claim 6, wherein the first public key is obtained through calculation on the first truncated polynomial ring according to $h_1 = pf_{q_1}^{-1}g$, wherein $p$ is the third system parameter, $f$ is the third random polynomial, $f_{q_1}^{-1}$ is an inverse element of the third random polynomial on the first truncated polynomial ring modulo the first system parameter, $g$ is the fourth random polynomial, $q_1$ is the first system parameter, and the first truncated polynomial ring is $Z_{q1}[X]/X^N-1$.

**8.** The method according to claim 3, wherein the second public key is randomly selected on the second truncated polynomial ring, and the second truncated polynomial ring is $Z_{q2}[X]/X^N-1$.

**9.** A method for public-key encrypted communication, comprising:

   receiving, by a second device, a first ciphertext and a second ciphertext that are sent by a first device;
   calculating, by the second device, according to a first private key, a second private key, and the first ciphertext to obtain a second random polynomial, and obtaining a first random polynomial according to a third private key, wherein the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial ring; and
   obtaining, by the second device, plaintext information according to the first random polynomial, the second random polynomial, the second ciphertext, and a second public key, wherein the plaintext information is unencrypted data to be sent by the first device to the second device, the second public key is represented in a form of a polynomial, and the second public key is randomly selected on a truncated polynomial ring.

**10.** The method according to claim 9, wherein the calculating, by the second device, according to a first private key, a second private key, and the first ciphertext to obtain a second random polynomial specifically comprises:

   calculating, by the second device, on a first truncated polynomial ring modulo a first system parameter according to the first ciphertext and the first private key to obtain a procedure parameter; and
   obtaining, by the second device, the second random polynomial on a third truncated polynomial ring modulo a third system parameter according to the procedure parameter and the second private key.

**11.** The method according to claim 10, wherein the obtaining a first random polynomial according to a third private key specifically comprises:

   calculating, by the second device, on the first truncated polynomial ring modulo the first system parameter according to the procedure parameter and the third private key to obtain the first random polynomial.

**12.** The method according to claim 11, wherein the obtaining, by the second device, plaintext information according to the first random polynomial, the second random polynomial, the second ciphertext, and a second public key specifically comprises:

   calculating, by the second device, on a second truncated polynomial ring modulo a second system parameter according to the first random polynomial, the second random polynomial, the second ciphertext, and the second public key to obtain the plaintext information.

**13.** The method according to claim 11, wherein the calculating, by the second device, on a first truncated polynomial ring modulo a first system parameter according to the first ciphertext and the first private key to obtain a procedure parameter specifically comprises:

calculating, by the second device, on the first truncated polynomial ring modulo the first system parameter according to $s=fc_1$ to obtain the procedure parameter, wherein $f$ is the first private key, and $c_1$ is the first ciphertext.

**14.** The method according to claim 13, wherein the obtaining, by the second device, the second random polynomial on a third truncated polynomial ring modulo a third system parameter according to the procedure parameter and the second private key specifically comprises:

calculating, by the second device, on the third truncated polynomial ring modulo the third system parameter according to $s_p=s(\mathrm{mod}\ p)$ and $r_2=s_p f_p^{-1}$ to obtain the second random polynomial, wherein $p$ is the third system parameter, $f_p^{-1}$ is the second private key, $s$ is the procedure parameter, and the third truncated polynomial ring is $Z_p[X]/X^N-1$.

**15.** The method according to claim 13, wherein the calculating, by the second device, on the first truncated polynomial ring modulo the first system parameter according to the procedure parameter and the third private key to obtain the first random polynomial specifically comprises:

calculating on the first truncated polynomial ring according to $s_p=s(\mathrm{mod}\ p)$ and $r_1=(s-s_p)G$ to obtain the first random polynomial, wherein $s$ is the procedure parameter, $q_1$ is the first system parameter, $p$ is the third system parameter, $G$ is the third private key, and the first truncated polynomial ring is $Z_{q1}[X]/X^N-1$.

**16.** The method according to claim 12, wherein the calculating, by the second device, on a second truncated polynomial ring modulo a second system parameter according to the first random polynomial, the second random polynomial, the second ciphertext, and the second public key to obtain the plaintext information specifically comprises:

calculating on the second truncated polynomial ring according to $M=c_2-r_1h_2-r_2$ to obtain the plaintext information, wherein $c_2$ is the second ciphertext, $r_1$ is the first random polynomial, $r_2$ is the second random polynomial, and $h_2$ is the second public key.

**17.** The method according to claim 11, wherein the first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

**18.** The method according to claim 17, wherein the third private key is obtained through calculation on the first truncated polynomial modulo the first system parameter according to $G=p^{-1}g_{q_1}^{-1}$, wherein $p^{-1}$ is an inverse element of the third system parameter modulo the first system parameter, $q_1$ is the first system parameter, $g_{q_1}^{-1}$ is an inverse element of the fourth random polynomial on the first truncated polynomial ring modulo the first system parameter, and $g$ is the fourth random polynomial.

**19.** An apparatus for public-key encrypted communication, comprising:

an encryption unit, configured to encrypt random information according to a first public key to obtain a first ciphertext; and further configured to encrypt plaintext information according to a second public key to obtain a second ciphertext, wherein the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring; and
a transceiver unit, configured to send the first ciphertext and the second ciphertext to the second device.

**20.** The apparatus according to claim 19, wherein the random information comprises a first random polynomial and a second random polynomial, and the encryption unit is specifically configured to:

> calculate on a first truncated polynomial ring modulo a first system parameter according to the first public key, the first random polynomial, and the second random polynomial to obtain the first ciphertext.

21. The apparatus according to claim 20, wherein the plaintext information is represented as a polynomial on a second truncated polynomial ring modulo a second system parameter, and the encryption unit is further specifically configured to:

> calculate on the second truncated polynomial ring modulo the second system parameter according to the second public key, the first random polynomial, the second random polynomial, and the plaintext information to obtain the second ciphertext.

22. The apparatus according to claim 20, wherein the encryption unit is configured to calculate on a truncated polynomial ring modulo the first system parameter according to the first public key, the first random polynomial, and the second random polynomial to obtain the first ciphertext, and is specifically configured to:

> calculate on the first truncated polynomial ring according to $c_1 = r_1 h_1 + r_2$ to obtain the first ciphertext, wherein $h_1$ is the first public key, $r_1$ is the first random polynomial, $r_2$ is the second random polynomial, the first truncated polynomial ring is $Z_{q1}[X]/X^N\text{-}1$, and $q_1$ is the first system parameter.

23. The apparatus according to claim 21, wherein the encryption unit is configured to calculate on the second truncated polynomial ring modulo the second system parameter according to the second public key, the first random polynomial, the second random polynomial, and the plaintext information to obtain the second ciphertext, and is specifically configured to:

> calculate on the second truncated polynomial ring according to $c_2 = r_1 h_2 + r_2 + M$ to obtain the second ciphertext, wherein $h_2$ is the second public key, $r_1$ is the first random polynomial, $r_2$ is the second random polynomial, the second truncated polynomial ring is $Z_{q2}[X]/X^N\text{-}1$, and $q_2$ is the second system parameter.

24. The apparatus according to claim 20 or 21, wherein the first public key is obtained through calculation on the first truncated polynomial ring modulo the first system parameter according to the first system parameter, a third random polynomial, and a fourth random polynomial, the third random polynomial has an inverse element on both the first truncated polynomial ring modulo the first system parameter and a third truncated polynomial ring modulo a third system parameter, and the fourth random polynomial has an inverse element on the first truncated polynomial ring modulo the first system parameter.

25. The apparatus according to claim 24, wherein the first public key is obtained through calculation on the first truncated polynomial ring according to $h_1 = p f_{q_1}^{-1} g$ , wherein $p$ is the third system parameter, $f$ is the third random polynomial, $f_{q_1}^{-1}$ is an inverse element of the third random polynomial on the first truncated polynomial ring modulo the first system parameter, g is the fourth random polynomial, $q_1$ is the first system parameter, and the first truncated polynomial ring is $Z_{q1}[X]/X^N\text{-}1$.

26. The apparatus according to claim 21, wherein the second public key is randomly selected on the second truncated polynomial ring, and the second truncated polynomial ring is $Z_{q2}[X]/X^N\text{-}1$.

27. An apparatus for public-key encrypted communication, comprising:

> a transceiver unit, configured to receive a first ciphertext and a second ciphertext that are sent by a first device; and
> a decryption unit, configured to calculate according to a first private key, a second private key, and the first ciphertext to obtain a second random polynomial, and obtain a first random polynomial according to a third private key, wherein the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial, wherein the decryption unit is further configured to obtain plaintext information according to the first random polynomial, the second random polynomial, the second ciphertext, and a second public key, wherein the plaintext information is unencrypted data to be sent by the first device to the second device, the second public key is represented in a form of a polynomial, and the second public key is randomly selected on a truncated polynomial ring.

28. The apparatus according to claim 27, wherein the decryption unit is specifically configured to:

calculate on a first truncated polynomial ring modulo a first system parameter according to the first ciphertext and the first private key to obtain a procedure parameter; and obtain the second random polynomial on a third truncated polynomial ring modulo a third system parameter according to the procedure parameter and the second private key.

29. The apparatus according to claim 28, wherein the decryption unit is further specifically configured to:

calculate, by the second device, on the first truncated polynomial ring modulo the first system parameter according to the procedure parameter and the third private key to obtain the first random polynomial.

30. The apparatus according to claim 29, wherein the decryption unit is further specifically configured to:

calculate on a second truncated polynomial ring modulo a second system parameter according to the first random polynomial, the second random polynomial, the second ciphertext, and the second public key to obtain the plaintext information.

31. The apparatus according to claim 29, wherein the decryption unit calculates on the first truncated polynomial ring modulo the first system parameter according to the first ciphertext and the first private key to obtain the procedure parameter, and is specifically configured to:

calculate on the first truncated polynomial ring modulo the first system parameter according to $s=fc_1$ to obtain the procedure parameter, wherein $f$ is the first private key, and $c_1$ is the first ciphertext.

32. The apparatus according to claim 31, wherein the decryption unit obtains the second random polynomial on the third truncated polynomial ring modulo the third system parameter according to the procedure parameter and the second private key, and is specifically configured to:

calculate on the third truncated polynomial ring modulo the third system parameter according to $s_p=s(\text{mod } p)$ and $r_2=s_p f_p^{-1}$ to obtain the second random polynomial, wherein $p$ is the third system parameter, $f_p^{-1}$ is the second private key, $s$ is the procedure parameter, and the third truncated polynomial ring is $Z_p[X]/X^N\text{-}1$.

33. The apparatus according to claim 31, wherein the decryption unit calculates on the first truncated polynomial ring modulo the first system parameter according to the procedure parameter and the third private key to obtain the first random polynomial, and is specifically configured to:

calculate on the first truncated polynomial ring according to $s_p=s(\text{mod } p)$ and $r_1=(s\text{-}s_p)G$ to obtain the first random polynomial, wherein $s$ is the procedure parameter, $q_1$ is the first system parameter, $p$ is the third system parameter, $G$ is the third private key, and the first truncated polynomial ring is $Z_{q1}[X]/X^N\text{-}1$.

34. The apparatus according to claim 30, wherein the decryption unit calculates on the second truncated polynomial ring modulo the second system parameter according to the first random polynomial, the second random polynomial, the second ciphertext, and the second public key to obtain the plaintext information, and is specifically configured to:

calculate on the second truncated polynomial ring according to $M=c_2\text{-}r_1h_2\text{-}r_2$ to obtain the plaintext information, wherein $c_2$ is the second ciphertext, $r_1$ is the first random polynomial, $r_2$ is the second random polynomial, and $h_2$ is the second public key.

35. The apparatus according to claim 29, wherein the first private key is a third random polynomial, the second private key is an inverse element of the third random polynomial on the third truncated polynomial ring modulo the third system parameter, and the third private key is obtained through calculation according to an inverse element of the third system parameter and an inverse element of a fourth random polynomial on the first truncated polynomial ring modulo the first system parameter.

36. The apparatus according to claim 35, wherein the third private key is obtained through calculation on the first truncated polynomial modulo the first system parameter according to $G=p^{-1} g_{q_1}^{-1}$, wherein $p^{-1}$ is an inverse element of the third system parameter modulo the first system parameter, $q_1$ is the first system parameter, $g_{q_1}^{-1}$ is an inverse element of the fourth random polynomial on the first truncated polynomial ring modulo the first system parameter, and
g is the fourth random polynomial.

A first device encrypts random information according to a first public key to obtain a first ciphertext; and the first device encrypts plaintext information according to a second public key to obtain a second ciphertext, where the plaintext information is unencrypted data to be sent by the first device to a second device, the first public key is represented in a form of a polynomial, the first public key is obtained through calculation on a truncated polynomial ring according to system parameters, the second public key is represented in a form of a polynomial, the second public key is randomly selected on a truncated polynomial ring, and the random information is randomly selected on a truncated polynomial ring ⌒S101

The first device sends the first ciphertext and the second ciphertext to the second device ⌒S102

FIG. 1

A second device receives a first ciphertext and a second ciphertext that are sent by a first device ∿S201

The second device calculates according to a first private key, a second private key, a first system parameter, and the first ciphertext to obtain a second random polynomial, and obtains a first random polynomial according to a third private key, where the first private key is represented in a form of a polynomial, the first private key is randomly selected on a truncated polynomial ring, the second private key is represented in a form of a polynomial, the second private key is an inverse element of the first private key on the truncated polynomial ring, the third private key is represented in a form of a polynomial, and the third private key is obtained through calculation according to an inverse element of a system parameter and a polynomial having an inverse element on a truncated polynomial ∿S202

The second device obtains plaintext information according to the first random polynomial, the second random polynomial, the second ciphertext, and a second public key, where the plaintext information is unencrypted data to be sent by the first device to the second device, the second public key is represented in a form of a polynomial, and the second public key is randomly selected on a truncated polynomial ring ∿S203

FIG. 2

First device | Second device

S301. Perform encryption according to a first public key and random information to obtain a first ciphertext, and encrypt plaintext information according to a second public key to obtain a second ciphertext

S302. Send the first ciphertext and the second ciphertext

S303. Calculate according to a first private key, a second private key, a first system parameter, and the first ciphertext to obtain a second random polynomial, and obtain a first random polynomial according to a third private key

S304. Obtain the plaintext information according to the first random polynomial, the second random polynomial, the second ciphertext, and the second public key

FIG. 3

Key generation process:

**S401** — Determine system parameters $q_1$, $q_2$, $N$, and $p$

**S402** — Determine a first truncated polynomial ring $Z_{q_1}[X]/X^N -1$, a second truncated polynomial ring $Z_{q_2}[X]/X^N -1$, and a third truncated polynomial ring according to the system parameters $Z_p[X]/X^N -1$ $q_1$, $q_2$, $p$, and $N$

**S403** — Determine a value range $L_f$ of a third random polynomial $f$ and a value range $L_g$ of a fourth random polynomial $g$

**S408** — Randomly select a second public key $h_2$ on the second truncated polynomial ring

**S404** — Randomly select a third random polynomial $f \in L_f$ and a fourth random polynomial $g \in L_g$, where $f$ has inverse elements $f_p^{-1}$ and $f_{q_i}^{-1}$ respectively on the third truncated polynomial ring $Z_p[X]/X^N -1$ and the first truncated polynomial ring $Z_{q_i}[X]/X^N -1$, and $g$ has an inverse element $g_{q_i}^{-1}$ on the first truncated polynomial ring $Z_{q_i}[X]/X^N -1$, where the third random polynomial $f$ is a first private key, and $f_p^{-1}$ is a second private key

**S406** — Calculate an inverse element $p^{-1}$ of $p$ modulo $q_1$

**S405** — Calculate a first public key $h_1 = pf_{q_i}^{-1}g$ on the first truncated polynomial ring

**S407** — Calculate a third private key $G = p^{-1}g_{q_i}^{-1} \pmod{q_1}$ on the first truncated polynomial ring

Key generation process:

Obtain the first public key $h_1$ and the second public key $h_2$

Obtain the first private key $f$, the second private key $f_p^{-1}$, and the third private key $G$

FIG. 4

Determine a first truncated polynomial ring $Z_{q_1}[X]/X^N-1$, a second truncated polynomial ring $Z_{q_2}[X]/X^N-1$, and a third truncated polynomial ring $Z_p[X]/X^N-1$ according to system parameters $q_1$, $q_2$, $p$, and $N$ $\curvearrowright S501$

Determine a value range $L_{r_1}$ of a first random polynomial $r_1$ and a value range $L_{r_2}$ of a fourth random polynomial $r_2$ on the third truncated polynomial ring $\curvearrowright S502$

Use a polynomial on the second truncated polynomial ring $Z_{q_2}[X]/X^N-1$ to represent plaintext information $M$ $\curvearrowright S504$

Calculate a first ciphertext $c_1=r_1h_1+r_2$ on the first truncated polynomial ring $Z_{q_1}[X]/X^N-1$ $\curvearrowright S503$

Calculate a second ciphertext $c_2=r_1h_2+r_2+M$ on the second truncated polynomial ring $Z_{q_2}[X]/X^N-1$ $\curvearrowright S505$

Encryption process

Obtain a ciphertext $c=(c_1,c_2)$ corresponding to the plaintext information $M$ $\curvearrowright S506$

FIG. 5

Determine a first truncated polynomial ring $Z_{q_1}[X]/X^N-1$, a second truncated polynomial ring $Z_{q_2}[X]/X^N-1$, and a third truncated polynomial ring $Z_p[X]/X^N-1$ according to system parameters $q_1$, $q_2$, $p$, and $N$ ⌐S601

Calculate a procedure parameter $s=fc_1$ on the first truncated polynomial ring, and calculate a remainder $s_p=s(\bmod\ p)$ of the procedure parameter modulo $p$ ⌐S602

Calculate a second random polynomial $r_2 = s_p f_p^{-1}$ on the third truncated polynomial ring $Z_p[X]/X^N-1$ ⌐S603

Calculate a first random polynomial $r_1=(s-s_p)G$ on the first truncated polynomial ring $Z_{q_1}[X]/X^N-1$ ⌐S604

Decryption process

Calculate plaintext information $M=c_2-r_1h_2-r_2$ on the second truncated polynomial ring $Z_{q_2}[X]/X^N-1$ ⌐S605

FIG. 6

1

Encryption unit → Transceiver unit

11    12

FIG. 7

2

Transceiver unit → Decryption unit

11    12

FIG. 8

## INTERNATIONAL SEARCH REPORT

| | International application No. |
| --- | --- |
| | **PCT/CN2015/071619** |

**A.  CLASSIFICATION OF SUBJECT MATTER**

H04L 9/30 (2006.01) i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN: public key, key, encrypt+, random, multinomial, polynomial

**C.  DOCUMENTS CONSIDERED TO BE RELEVANT**

| Category* | Citation of document, with indication, where appropriate, of the relevant passages | Relevant to claim No. |
| --- | --- | --- |
| X | CN 1692598 A (PANASONIC CORPORATION), 02 November 2005 (02.11.2005), description, page 18, line 1 to page 25, line 17, and figures 1-3 | 1, 19 |
| A | CN 1692598 A (PANASONIC CORPORATION), 02 November 2005 (02.11.2005), the whole document | 2-18, 20-36 |
| A | CN 103580859 A (STATE GRID CORPORATION OF CHINA et al.), 12 February 2014 (12.02.2014), the whole document | 1-36 |
| A | US 2007110232 A1 (TOSHIBA CORP.), 17 May 2007 (17.05.2007), the whole document | 1-36 |

☐ Further documents are listed in the continuation of Box C.        ☒ See patent family annex.

| | |
| --- | --- |
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>27 March 2015 (27.03.2015) | Date of mailing of the international search report<br><br>**24 April 2015 (24.04.2015)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**SHEN, Li**<br><br>Telephone No.: (86-10) **62089561** |

Form PCT/ISA/210 (second sheet) (July 2009)

## INTERNATIONAL SEARCH REPORT
### Information on patent family members

International application No.

**PCT/CN2015/071619**

| Patent Documents referred in the Report | Publication Date | Patent Family | Publication Date |
|---|---|---|---|
| CN 1692598 A | 02 November 2005 | CN 1745537 B | 09 June 2010 |
| | | CN 1745537 A | 08 March 2006 |
| | | EP 1475920 A1 | 10 November 2004 |
| | | EP 1475920 A4 | 02 March 2005 |
| | | EP 1569378 A1 | 31 August 2005 |
| | | EP 1569378 A4 | 02 August 2006 |
| | | WO 2004051920 A1 | 17 June 2004 |
| | | WO 2004051921 A1 | 17 June 2004 |
| | | US 2004165726 A1 | 26 August 2004 |
| | | US 7471792 B2 | 30 December 2008 |
| | | US 2004174997 A1 | 09 September 2004 |
| | | JP 2004201293 A | 15 July 2004 |
| | | JP 2004201292 A | 15 July 2004 |
| | | JP 4485175 B2 | 16 June 2010 |
| | | KR 20050083566 A | 26 August 2005 |
| | | KR 20050087815 A | 31 August 2005 |
| | | KR 101027199 B1 | 06 April 2011 |
| | | AU 2003302545 A1 | 23 June 2004 |
| | | AU 2003302544 A1 | 23 June 2004 |
| CN 103580859 A | 12 February 2014 | None | |
| US 2007110232 A1 | 17 May 2007 | US 7773747 B2 | 10 August 2010 |
| | | JP 2007139895 A | 07 June 2007 |
| | | JP 4575283 B2 | 04 November 2010 |

Form PCT/ISA/210 (patent family annex) (July 2009)